# EUROPEAN PATENT APPLICATION

(11) **EP 4 324 872 A1**
(43) Date of publication of application: **21.02.2024**
(21) Application number: 23189026.0
(22) Date of filing: 01.08.2023
(51) Int. Cl.: C08J 9/32, B29C 44/00

(54) **PRODUCTION METHOD OF A SEALING PRODUCT WITH LOW DENSITY AND THERMAL CONDUCTIVITY**

(30) Priority: 04.08.2022 TR 202212365
(71) Applicant: Conta Elastik Urunler Sanayi Ve Ticaret Anonim Sirketi, Istanbul (TR)
(72) Inventor: YESILOT, Mustafa, Istanbul (TR)
(74) Representative: Sevinç, Cenk

(57) **Abstract**

The invention relates to a production method that enables the density and thermal conductivity of the styrene-ethylene-butylene-styrene polymer used as a sealing product to be reduced by using an exothermic foaming agent.

## Description

### Technical field of the invention

The invention relates to a production method developed to reduce the density and thermal conductivity of the polymer used as a sealant.

In particular, the invention relates to a production method that enables the density and thermal conductivity of the styrene-ethylene-butylene-styrene polymer used as a sealing product to be reduced by using an exothermic foaming agent.

### State of the Art

Foaming agents, in other words, blowing agents or expanding agents, are agents used to expand the polymer under suitable conditions to obtain a spongy polymer foam when added to the polymer. These agents reduce the density and thermal conductivity of polymers.

Foaming agents are grouped under two main groups as physical foaming agents and chemical foaming agents. Physical foaming agents are organic agents that transform into a compressed gas form cellular structure during the melting stage. At the same time, inorganic physical foaming agents are also known as evaporative type foaming agents because they tend to be volatile liquids. Physical foaming agents dissolve in the polymer matrix and form foam cells as a result of evaporation in the matrix. Physical foaming agents, according to a widely applied technique, form foam cells within the polymer structure when the physical foaming agents are activated and expanded by applying low pressure to the mixture obtained by adding them to a molten polymer. While physical foaming agents, aliphatic hydrocarbon and halogenic hydrocarbons are in organic form, nitrogen, argon and carbon dioxide are inorganic.

Chemical foaming agents are organic or inorganic compounds that have low molecular weight, are in solid or liquid form at room temperature, and release gases such as carbon monoxide, carbon dioxide or nitrogen to the environment when their structure is destroyed at a certain temperature. Sodium bicarbonate, ammonium carbonate, ammonium bicarbonate and calcium azide are some of the inorganic chemical foaming agents. Examples of organic chemical foaming agents are azodicarbonamide, hydrazocarbonamide, benzenesulfonyl hydrazide, dinitrosopentamethylene tetramine, toluenesulfonylhydrazide, benzenesulfonylhydrazide, azobisisobutyronitrile and barium azodicarboxylate.

Chemical foaming agents are generally mixed with the solid polymer, and as a result of applying heat and pressure to the mixture, they add the gas in their structure into the granular structure of the polymer. Different chemical foaming agents are activated at different temperatures. Therefore, the choice of chemical foaming agent depends on the type of polymer to be used in the process, the process conditions and the size of the emitted gas cells.

Chemical foaming agents are advantageous over physical foaming agents as they can be incorporated into the unheated polymer in a solid state.

Chemical foaming agents are divided into exothermic and endothermic agents. Endothermic chemical foaming agents absorb heat during processing. Endothermic agents, which reach the required temperature by absorbing sufficient heat, decompose rapidly and release gas. When endothermic chemical foaming agents are heated by applying low temperatures, they extend the processing time as they reach the sufficient temperature late, and they stop the gas release when the temperature drops below the decomposition temperature. Exothermic chemical foaming agents, on the other hand, generate heat during the process, thus emitting both gas and heat energy to the environment. It is not always desirable for the exothermic foaming agent to give heat to the environment. Because this excess heat causes some parts of the steel surfaces used in the production phase to overheat. Due to the surface temperature differences caused by the overheating of these regions, it may cause quality problems in the foaming process or the injection process.

During the activation of exothermic foaming agents, non-homogeneous bubble formations are observed due to the excess heat given out. Therefore, it is more difficult to keep the process parameters under control. In order to reduce the heterogeneous bubble formation, the injection mould must be heavily cooled immediately after the reaction has started. The bubbles are initially filled with the gas composition released by the decomposition effect. However, as the gas in the bubbles replaces the air around the foams over time, only air remains in the bubbles as a result of the process. The cell density of the polymer obtained at the end of the process depends on the amount of foaming agent, the time and the retention of gas in the polymer matrix with the effect of temperature. Bubble gas pressure balance, surface tension, viscosity of the formulation and the effect of additives affect the process actively. The coalescence and growth of foams affect cell density and cell size.

With the foaming agent added to the polymer materials, a decrease in density and thermal conductivity is expected. Since the density of the reduced polymer will be more elastic, its strength is increased in shaping processes and during use. In addition, the polymer, whose thermal conductivity is reduced, exhibits an insulating property and reduces heat conduction. The crystal structures of the foaming agents used in order to provide these properties are also important. Foaming agents with microsphere crystal structure are sensitive foaming agents characterised by easy control of specific gravity, retention of closed cells, small sphere diameter and uniform distribution. Microsphere foaming agents are preferred because they can reach 60 times their own volume when activated, in addition to their highly controlled foaming, closed and smooth cell structure, protection against water ingress, creating internal pressure to combat shrinkage.

Foaming agents made of expandable microspheres have a kind of core-shell structure, with a core consisting of a spherical plastic particle consisting of alkane gas and a shell structure consisting of a thermoplastic polymer capable of releasing hydrocarbons. Microsphere foaming agents increase their internal pressure by expanding the hydrocarbons in the shell structure by softening the hard polymer shells when heated. Thus, agents with increased volume achieve the foaming target. Although the polymer shell expands and softens when the microsphere foaming agents cool down, the expanding volume is preserved because it is in a hard structure. Thus, the microspheres, which are more resistant to external pressure and have a flexible structure, become resistant to breakage as their density decreases. The use of microsphere foaming agent reduces the density of the polymer, while decreasing the thermal conductivity accordingly. At the same time, it provides the improvement of permanent deformation and breaking strength. However, as the usage rate of microspherical foaming agents increases, it decreases the surface quality and makes the application of quality control methods more difficult as it reduces the strength of the material.

The patent document no "TR202009019" and titled "An insulator and the production method of this insulator" in the state of the art is reviewed. The abstract of the invention that is the subject of said application reads: "A method of producing an insulator specifically to reduce the thermal bridge effect between two connected structural elements, comprising the process steps of foaming a polymer composition comprising one or more thermoplastic polymers; one or more foaming agents and 0.01 to 6% by weight of low-emission metal particles such that the metal particles form a crude insulator; heating one or more regions of the raw insulator; local condensation on the surface of the heated regions/foams of the raw insulator by applying pressure to form a dielectric with the condensed region(s) at the surface; and cooling of the insulator resulting from the step to ambient temperature. It is the insulator obtained in this way and its use, especially for the insulation of the connection of glass building profiles, panels and front cladding." .

The patent document no "TR200102276" and titled "Soft and flexible foams obtained from blends of alkenyl aromatic polymers and largely random interpolymers" in the state of the art is examined. The abstract of the invention that is the subject of said application reads: " "Soft foam with Soldier C hardness of about 65, comprising; A is 30 to 70% by weight (based on the combined weight of components A and B) one or more alkenyl aromatic polymers; and B is 30 to 70% by weight (based on the combined weight of components A and B) one or more substantially random interpolymers; and optionally one or more nucleating agents and optionally one or more other additives; and one or more foaming agents." .

Patent document no "CN107501837A" in the state of the art is reviewed. In the invention that is the subject of the application, a thermoplastic elastomer foamed door seal strip characterised by being prepared from, to be prepared in portions by weight, 60 to 110 parts of styrene elastomer, 10 to 30 parts of high density polyethylene, 10 to 40 parts polypropylene, 60 to 60 parts 110 parts filler oil, 30 to 80 parts mineral filler, 1 to 5 parts lubricant, 1 to 5 parts of coupling agent, 0.1 to 2 parts of antioxidant, 0 to 5 parts of crosslinking agent and 1 to 8 parts of blowing agent materials, and a preparation method thereof are described.

Patent document no "CN111303617A" in the state of the art is reviewed. In the invention that is the subject of the application, a low density environmentally friendly thermoplastic polyurethane elastomer particle, especially suitable for plastic runway, comprising, by mass, thermoplastic polyurethane elastomer, 3-20% second polymer material, 5-60% inorganic filler, 2-15% third polymer material and 0.5-6% foaming agent and preparation method thereof are described.

Patent document no "CN106589763A" in the state of the art is reviewed. In the invention that is the subject of the application, a thermoplastic elastomer low density extrusion foam sealing strip material comprising 40-55% by mass of styrene elastomer, 20-36% processed oil, 5-14% plastic, 2-9% filler, 1-5% anti-oxidant and 0.5-1.5% microsphere foaming agent and preparation method thereof are described.

### The aim of the invention

The most important aim of the invention is to ensure that the density of the polymer has lower values than known values by using exothermic chemical foaming agent with microsphere structure.

Another aim of the invention is to ensure that the thermal conductivity of the polymer has lower values than known values by using exothermic chemical foaming agent with microsphere structure.

Another aim of the invention is to have a composition and process parameters determined so that the density and thermal conductivity of the polymer reach a lower level than the known value.

Another aim of the invention is to keep the process parameters and production process under control by using exothermic chemical foaming agent in microsphere structure and accordingly to obtain a sealing product with homogeneous bubble content without quality problems. In this way, a sealing product without surface problems is obtained.

Another aim of the invention is to improve the tensile strength and permanent deformation of the sealant produced using the chemical foaming technique.

### Description of drawings:

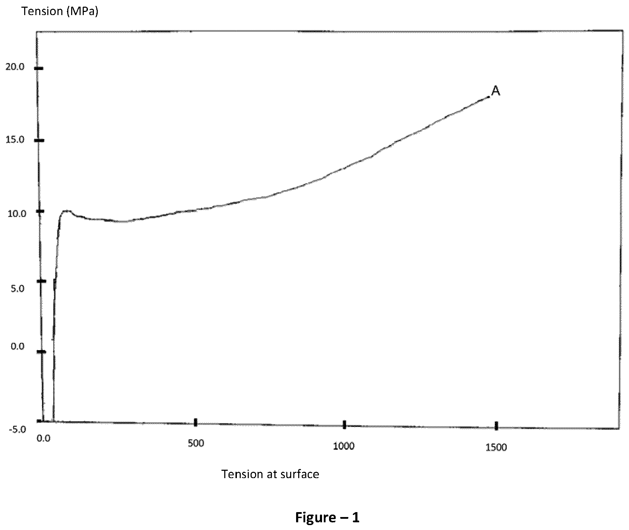

**FIGURE -1;** is the drawing that gives the image of the graphic showing the breaking strength of the sealing product that is the subject of the invention.

### Description of References

### A. Breaking Point

### Description of the invention

The invention relates to obtaining a sealed product by reducing the density and accordingly the thermal conductivity of the styrene-ethylene-butylene-styrene (SEBS) polymer by applying the chemical foaming technique by using a microsphere structured exothermic foaming agent.

Styrene-ethylene-butylene-styrene (SEBS) polymer is an important thermoplastic elastomer that behaves like rubber without changing its chemical structure by crosslinking reaction. SEBS polymer is used in various industries with its high thermal stability and high resistance to atmospheric or chemical abrasion, and its steamcleanable structure. The density of the SEBS polymer varies between 0.89 and 1.25 g/cm³. The exothermic foaming agent used is micro-spherical, insoluble in water and is activated at 60-100 °C.

Sealant production method with low density and thermal conductivity comprises the process steps of
∘ Taking the mixture consisting of SEBS polymer, microspherical exothermic foaming agent, antioxidant, plastic, and filling material is into the extrusion mould and applying 6-10 bar pressure,
∘ Applying temperature at 130-190°C in 6-section extruder, and
∘ Cooling the area seal material reaching its final shape.

It is known in the literature that the density of SEBS polymer is reduced from 0.94 g/cm³ to 0.89 g/cm³ with the use of foaming agent. Figure-1 shows the rupture-strength graph of the sealing product obtained with the production method given above. The breaking point (A) on the graph shows the percent elongation at the maximum force applied to the sealant. It is observed that the breaking strength of SEBS polymer increases with the use of foaming agent. The increase in the breaking strength of the SEBS polymer occurs with the increase in its elasticity. With the use of microspherical exothermic foaming agent, the density of the SEBS polymer is reduced, and its breaking strength and permanent deformation are higher as it is more elastic.

The thermal conductivity value of the sealing product, whose density and weight is reduced, obtained by the production parameters kept under control and the use of chemical foaming agent, is also reduced in direct proportion to the decrease in density. As can be seen from Figure-1, the density of the SEBS polymer is reduced to 0.45 g/cm³ with the applied method, and the thermal conductivity value of the SEBS polymer is reduced to 0.075-0.045 W/m·K depending on the density decrease. In this way, a sealing product with increased impermeability is obtained.

## Claims

1. Production method for sealant providing density and thermal conductivity reduction, comprising the process steps of
• Taking the mixture consisting of SEBS polymer, microspherical exothermic foaming agent, antioxidant, plastic, and filling material is into the extrusion mould and applying 6-10 bar pressure,
• Applying temperature at 130-190°C in 6-section extruder, and
• Cooling the area seal material reaching its final shape.

2. Sealing product produced according to the method of the previous claim.

3. Sealing product according to Claim 2, wherein its density is 0.45 g/cm³ and its thermal conductivity is 0.075-0.045 W/m·K.

4. Sealing product according to Claim 2, comprising exothermic foaming agent that has a microsphere structure, is insoluble in water and is activated at 60-100 °C.
